# EUROPÄISCHE PATENTANMELDUNG

(11) **EP 1 335 439 A1**
(43) Veröffentlichungstag der Anmeldung: **13.08.2003**
(21) Anmeldenummer: 02002552.4
(22) Anmeldetag: 04.02.2002
(51) Int. Cl.: H01M 8/04

(54) **Brennstoffzellenvorrichtung mit interner kathodenseitiger Kreislaufströmung**

(71) Anmelder: SFC Smart Fuel Cell AG, 85649 Brunnthal-Nord (DE)
(72) Erfinder: Böhm, Christian, 85635 Siegertsbrunn (DE)
(74) Vertreter: Grünecker, Kinkeldey, Stockmair & Schwanhäusser Anwaltssozietät

(57) **Zusammenfassung**

Die Versorgung von Brennstoffzellenvorrichtungen mit Kathodenfluiden und insbesondere die Steuerung der Fluideigenschaften mit Hilfe einer kathodenseitigen Kreislaufströmung durch das Erzeugen einer Kreislaufströmung des kathodenseitigen Fluids innerhalb der Brennstoffzellenvorrichtung bewirkt eine Homogenisierung der Temperatur- und Druckverteilung auf der Kathodenseite.

## Beschreibung

### Gebiet der Erfindung

Die Erfindung betrifft die Versorgung von Brennstoffzellenvorrichtungen mit Kathodenfluiden und insbesondere die Steuerung der Fluideigenschaften mit Hilfe einer kathodenseitigen Kreislaufströmung.

### Stand der Technik

Die "kalte" Verbrennung, die beim Betreiben einer Brennstoffzelle stattfindet, ist ebenso wie eine gewöhnliche "heiße" Verbrennung" eine Redoxreaktion, bei der ein Brennstoff (Reduktionsmittel) durch ein Oxidationsmittel oxidiert ("verbrannt") wird, wobei Abfallprodukte entstehen. Im Unterschied zur heißen Verbrennung laufen bei der kalten Verbrennung Reduktion und Oxidation räumlich voneinander getrennt ab, so dass ein bedeutender Anteil der Reaktionsenergie nicht als Wärmeenergie, sondem als nutzbare elektrische Energie anfällt.

Wie bei der Unterhaltung einer herkömmlichen Verbrennung in einem Brenner oder einem Verbrennungsmotor stellen sich somit für das Betreiben einer Brennstoffzelle die technischen Herausforderungen der Zufuhr von Reduktion- und Oxidationsmitteln und der Abfuhr der Abfallprodukte. Ferner kommen noch brennstoffzellenspezifische Probleme hinzu, die zum Teil auf dem räumlich getrennten Stattfinden der oben beschriebenen Reaktionen basieren, so z.B. der daraus resultierende vergleichsweise lange Strömungsweg der Fluide (Reduktions-/Oxidationsmittel) durch die Brennstoffzellenvorrichtung. Dieses Problem ist insbesondere dann gravierend, wenn die Brennstoffzellenvorrichtung aus miteinander verschalteten Brennstoffzellen bestehen, die nacheinander durchlaufen werden.

In den meisten gebräuchlichen Typen von Brennstoffzellen ist das verwendete Oxidationsmittel Sauerstoff, so dass die Sauerstoffversorgung derartiger Brennstoffzellen vielfach durch die Umgebungsluft erfolgen kann.

Aus diesem Grunde wird nachfolgend die der Erfindung zugrundeliegende Problemstellung unter beispielhafter Bezugnahme auf das Medium "Luft" beschrieben. Es versteht sich aber von selbst, dass die nachfolgenden Erläuterungen nicht auf Luft eingeschränkt sind, sondern sinngemäß auch auf andere Medien übertragen werden können.

Reduktionsmittel sind in der Regel Wasserstoff und Wasserstoffverbindungen, beispielsweise Methanol.

Beispielsweise wird bei einer Direkt-Methanol-Brennstoffzellenvorrichtung (DMFC) über den Kathodeneinlass Luft zugeführt, die den Kathodenbereich der Brennstoffzellenvorrichtung überstreicht. Hierbei erfolgt eine Verarmung an Sauerstoff. Die unreagierten Luftbestandteile wie Stickstoff und Argon, aber auch unverbrauchter Sauerstoff, werden als Abluft am Kathodenauslass der Brennstoffzellenvorrichtung ausgegeben.

Der Wirkungsgrad einer Brennstoffzellenvorrichtung hängt von einer Vielzahl von Betriebsbedingungen ab, die unter anderem auch die Zustandsgrößen des kathodenseitigen Fluids umfassen, beispielsweise Temperatur, Druck, Sauerstoffanteil und Feuchtigkeit.

In der Theorie gibt es für diese Zustandsgrößen optimale Werte. Für den Betrieb einer Brennstoffzellenvorrichtung wäre es daher wünschenswert, diese optimalen Werte möglichst homogen über den gesamten Elektrolyten einzustellen.

In der Praxis aber ist dies nur schwer zu bewerkstelligen. So legt beispielsweise die einer DMFC-Brennstoffzelle zugeführte Luft vom Lufteinlass bis zum Luftauslass einen mehr oder weniger langen Strömungsweg zurück, auf dem sich diese Zustandsgrößen lokal ändern können und dies in der Regel auch tun. Beispiele für solche Änderungen sind Druckabfall, Sauerstoffverarmung, Temperaturänderung und Änderung der Luftfeuchtigkeit.

Zur Vermeidung von inhomogenen Betriebsbedingungen sind aus der Technik die folgenden Lösungsansätze bekannt:
- Brennstoffzellenvorrichtungen wird Luft in einem weit über dem zur Sauerstoffversorgung stöchiometrisch notwendigen Ausmaß zugeführt, wodurch der nachteilige Effekt der Sauerstoffverarmung der Luft beim Durchlauf durch die Brennstoffzellenvorrichtung verringert wird. Allerdings tritt dabei ein Druckabfall zwischen Einlass und Auslass auf, der durch aufzuwendende Kompressionsarbeit aufrecht erhalten werden muss. Dies schlägt sich als Verlustleistung negativ im Gesamtwirkungsgrad nieder, und zwar um so gravierender, je weiter der in der Brennstoffzellenvorrichtung erforderliche Luftdruck vom Atmosphärendruck abweicht.
- Um die Feuchtigkeit in einem erwünschten Bereich zu halten, werden Verdampfer- bzw. Zerstäubervorrichtungen eingesetzt. Diese erfordern aber einen zusätzlichen Aufwand und Platzbedarf.
- Es wird eine Temperaturregelung der Kathodenströmung durchgeführt. Hierzu verwendete Kühlkreisläufe bedingen gleichfalls einen deutlich erhöhten Aufwand.

### Beschreibung der Erfindung

Es ist eine Aufgabe der Erfindung, eine Vorrichtung und ein Verfahren bereitzustellen, mit denen die Nachteile der oben beschriebenen, Stand der Technik verwendeten Maßnahmen vermieden bzw. beseitigt werden.

Diese Aufgabe wird erfindungsgemäß durch das im Anspruch 12 angegebene Verfahren und die im Anspruch 1 beschriebene Brennstoffzellenvorrichtung gelöst. Vorteilhafte Weiterbildungen werden in den Unteransprüchen beschrieben.

Gemäß dem erfindungsgemäßen Verfahren wird eine Kreislaufströmung von kathodenseitigem Fluid innerhalb einer Brennstoffzellenvorrichtung erzeugt.

Die erfindungsgemäße Brennstoffzellenvorrichtung umfasst einen Kathodenbereich zur Aufnahme eines kathodenseitigen Fluids und Einrichtungen zur Erzeugung einer Kreislaufströmung des kathodenseitigen Fluids innerhalb der Brennstoffzellenvorrichtung.

Die Brennstoffzellenvorrichtung wird mit einem Überschuss an kathodenseitigen Fluid betrieben, so dass die kathodenseitig vorhandene und größtenteils an der Kreislaufströmung teilnehmende Menge an Oxidationsmittel in der Kathodenkammer größer ist, als es dem eigentlichen, durch die Reaktionsstöchiometrie bedingten Verbrauch entspricht. Somit erfährt ein Volumenelement des kathodenseitigen Fluids bei einem Durchlauf durch die Brennstoffzellenvorrichtung nur eine teilweise Abreicherung des Oxidationsmittels, so dass das Fluid ohne gravierende Herabsetzung des Wirkungsgrades nochmals, unter Umständen sogar mehrfach, an der Kreislaufströmung teilnehmen kann. Im Prinzip ist es dadurch möglich, eine vollständig abgeschlossene Brennstoffzellenvorrichtung ohne Zu- oder Abfuhr von irgendwelchen Medien für eine gewisse Zeitdauer zu betreiben.

Da die Kreislaufströmung innerhalb der Brennstoffzellenvorrichtung stattfindet, stellen sich nach kurzer Zeit weitgehend homogene Bedingungen im kathodenseitigen Fluid ein. Falls notwendig, können Einrichtungen bereitgestellt werden, um zu erreichen, dass die Zustandsgrößen des kathodenseitigen Fluids diejenigen Werte annehmen, die einen optimalen Wirkungsgrad der Brennstoffzellenvorrichtung gewährleisten.

Um einen längeren oder kontinuierlichen Betrieb der Brennstoffzellenvorrichtung zu ermöglichen, weist diese in einer bevorzugten Ausführungsform eine kathodenseitige Einlassvorrichtung für eine Fluidzufuhr auf, sowie eine Vorrichtung zur Abtrennung von Abfallstoffen aus der Kreislaufströmung.

Es wird darauf hingewiesen, dass der Begriff "Abfallstoffe" hier ganz allgemein verwendet wird und sowohl Reaktionsprodukte, beispielsweise Wasser, als auch mit dem kathodenseitig zugeführtem Fluid eingebrachte Substanzen, die an den stattfindenden Reaktionen nicht teilnehmen, umfasst, im Fall von Luft vor allem Stickstoff. Durch die Abtrennung dieser Abfallstoffe wird erreicht, dass das kathodenseitige Fluid keine unerwünschte Anreicherung an Abfallstoffen erfährt.

Für den längeren Betrieb genügt es, wenn die abgetrennten Abfallstoffe an einer dafür vorgesehenen Stelle innerhalb der Brennstoffzellenvorrichtung deponiert werden, u.U. in einem anderen, vorzugsweise kompakteren Aggregatszustand. Zum Zwecke der Deponierung können die Abfallstoffe auch chemische Reaktionen eingehen oder durch geeignete Materialien adsorbiert werden.

Für einen kontinuierlichen (Endlos-)Betrieb ist es allerdings notwendig, die abgetrennten Abfallstoffe aus der Brennstoffzellenvorrichtung zu entfernen. Daher ist in einer vorteilhaften Weiterbildung der Brennstoffzellenvorrichtung die Abtrennungseinrichtung so ausgebildet, dass die aus dem Fluidstrom abgetrennten Abfallstoffe aus der Brennstoffzellenvorrichtung entfernt werden können, beispielsweise durch einen Fluidauslass.

In einer besonders bevorzugten Weiterbildung der erfindungsgemäßen Brennstoffzellenvorrichtung ist ferner eine Steuereinrichtung vorgesehen, um den Anteil an Oxidationsmittel im kathodenseitigen Fluid in der Brennstoffkammer der Brennstoffzellenvorrichtung zu steuern und so auf einen möglichst optimalen Wert einzustellen.

Die Steuereinrichtung kann zum Beispiel in die kathodenseitige Einlassvorrichtung integriert sein und eine Dosiereinrichtung umfassen, um durch dosierte Zufuhr von Frischluft oder reinem Sauerstoff den Anteil an Oxidationsmittel im kathodenseitigen Fluid innerhalb der Brennstoffzellenvorrichtung auf einen erwünschten Wert einzustellen und diesen Wert während des Betriebs konstant zu halten.

Bei einer Ausbildung der Brennstoffzellenvorrichtung ohne Einlassvorrichtung muss der Oxidationsmittelverbrauch durch ein innerhalb der Brennstoffzellenvorrichtung vorgesehenes Oxidationsmittel-Reservoir kompensiert werden, aus welchem Oxidationsmittel durch die Steuereinrichtung in dosierter Form dem Kathodenfluid zugeführt wird.

In einer weiteren bevorzugten Weiterbildung umfasst die Brennstoffzellenvorrichtung eine Einrichtung, die es erlaubt, den Feuchtigkeitsgehalt des im Kreis laufenden Fluidstroms zu regulieren.

Eine solche Einrichtung ist in mehrfacher Hinsicht vorteilhaft: Bei vielen Typen von Brennstoffzellenvorrichtungen entsteht Wasser als kathodenseitiges Reaktionsprodukt und muss daher abgeführt werden, um eine Anreicherung zu vermeiden. Andererseits ist in der Regel ein gewisser Feuchtigkeitsgehalt des kathodenseitigen Fluids für den Betrieb der Brennstoffzellenvorrichtung durchaus erwünscht, teilweise sogar erforderlich, so dass das Wasser nicht vollständig abgeschieden werden sollte oder darf.

Es sollte daher gewährleistet werden, dass sich der Feuchtigkeitsgehalt von seinem optimalen Wert - sei es nach oben oder nach unten - nicht zu stark weg entfernt. Insbesondere bei solche Brennstoffzellenvorrichtungen, bei denen das kathodenseitige Fluid eine Gasgemisch ist, was bei der überwiegenden Zahl von Brennstoffzellentypen tatsächlich der Fall ist, sollte der Feuchtigkeitsgehalt des Gasgemisches nicht so groß werden, dass ein Auskondensieren des kathodenseitig entstehenden Wassers erfolgt.

Vorzugsweise umfasst die Einrichtung zur Steuerung des Feuchtigkeitsgehaltes daher einen Tröpfchenabscheider, der eine effektive Reduzierung des Feuchtigkeitsgehaltes des Fluidkreislaufs ermöglicht.

Die Abtrennungseinrichtung kann so mit der Einrichtung zur Steuerung des Feuchtigkeitsgehaltes verbunden sein, dass Wasserdampf bzw. abgeschiedenes Wasser aus der Brennstoffzellenvorrichtung entfernt werden.

In einer besonders bevorzugten alternativen oder weiterführenden Weiterbildung umfasst die Abtrennungseinrichtung eine Drossel, mit der die Kathodenseite der Brennstoffzellenvorrichtung entlüftet werden kann. Dadurch können gasförmige Abfallstoffe, darunter auch nicht verwertbare Gaskomponenten im kathodenseitig zugeführten Fluid, aus dem Kathodenbereich der Brennstoffzellenvorrichtung entfernt werden.

Die Drossel ist zweckmäßigerweise mit der kathodenseitigen Einlassvorrichtung für die Fluidzufuhr abgestimmt, so dass sich die Druckverhältnisse auf der Kathodenseite der Brennstoffzellenvorrichtung regulieren lassen. Daher umfasst die kathodenseitige Einlassvorrichtung in einer besonders bevorzugten Weiterbildung eine Dosiereinrichtung für die Fluidzufuhr. Eine derartige Dosiereinrichtung kann beispielsweise eine Pumpe oder Mikropumpe umfassen, mit der die Fluidzufuhr in die kathodenseitige Kammer der Brennstoffzellenvorrichtung fein gesteuert werden können.

Da die Menge der zu- und abzuführenden Fluide im Wesentlichen dem stöchiometrischen Verbrauch entspricht und nur einen Bruchteil des am Kreislauf teilnehmenden Fluidstroms ausmacht, ist die durch aufzuwendende Kompressionsarbeit bedingte Herabsetzung des Wirkungsgrades deutlich niedriger als bei herkömmlichen Brennstoffzellenvorrichtungen.

In einer zusätzlichen oder alternativen vorteilhaften Weiterbildung umfasst die Brennstoffzellenvorrichtung eine Temperaturregeleinrichtung, um die Temperatur des kathodenseitigen Fluids zu regulieren.

Die Temperaturregelung wird vorzugsweise durch im Bereich der Kreislaufströmung vorgesehene Heizungs- und/oder Kühleinrichtungen realisiert. Dadurch kann die Temperatur des kathodenseitigen Fluids so eingestellt werden, dass sie im gesamten Kathodenbereich innerhalb eines vorbestimmten Toleranzbereiches liegt, oder bevorzugt den für das Betreiben der Brennstoffzellenvorrichtung optimalen Wert annimmt.

Die Grundgedanken der Erfindung können in Brennstoffzellen jeden Typs implementiert werden. Besonders vorteilhaft sind die der Erfindung zugrunde liegenden Prinzipien aber bei Brennstoffzellenvorrichtungen, die eine stapelartige Anordnung von Elektrolyteinrichtungen aufweisen. In der Technik wird eine derartige Anordnung häufig als Brennstoffzellenstack bezeichnet.

Brennstoffzellenstacks weisen in der Regel vergleichsweise lange Strömungswege auf, während derer sich Zustandsgrößen des strömenden Fluids ändern können, was zu ungünstigen Betriebseigenschaften wie Inhomogenitäten, Druckabfall und An- bzw. Abreicherung bestimmter Komponenten führt. Durch das Erzeugen und Aufrechterhalten der Kreislaufströmung werden derartige Problem deutlich reduziert oder sogar ganz vermieden.

Besonders bevorzugte Einsatzgebiete der Erfindung sind Brennstoffzellenvorrichtungen, die als Brennstoff (Reduktionsmittel) Wasserstoff oder Methanol verwenden.

Weitere vorteilhafte Weiterführungen werden im Hinblick auf spezielle Ausführungsformen der Erfindung beschrieben. Zur besseren Veranschaulichung wird diese nachfolgend unter Bezugnahme auf die beigefügten Figuren erläutert.

### Dabei zeigen:

Fig. 1: ein erstes schematisches Ausführungsbeispiel zur Erläuterung der grundlegenden Prinzipien der Erfindung;
Fig. 2: eine zweite schematische Ausführungsform der vorliegenden Erfindung;
Fig. 3: eine dritte detailliertere Ausführungsform der Erfindung.

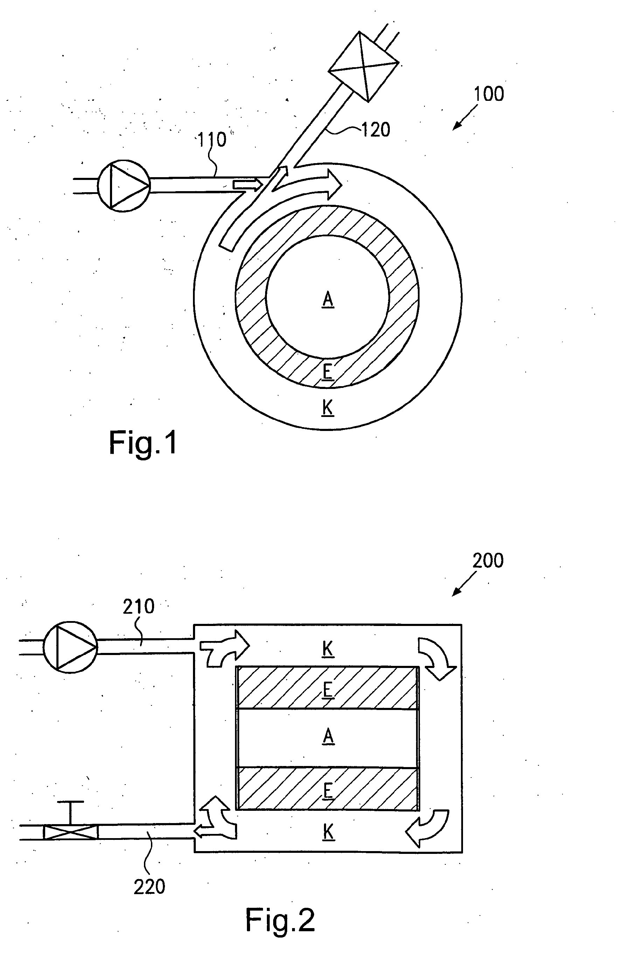

Figur 1 ist eine stark vereinfachte Darstellung einer Brennstoffzellenvorrichtung und dient hauptsächlich zur Erläuterung der Erfindung und insbesondere zur Hervorhebung des der Erfindung zugrundeliegenden Konzepts.

Die beispielhafte Brennstoffzellenvorrichtung 100 von Figur 1 ist zylindersymmetrisch aufgebaut und besitzt eine röhrenförmige Elektrolyteinrichtung E. Das Innere dieser Röhre stellt den Anodenbereich A der Brennstoffzellenvorrichtung 100 dar, während der Bereich, der zwischen einem äußeren Mantel und dem Äußeren der Elektrolyteinrichtung E gebildet wird, den der Kathodenseite der Elektrolyteinrichtung E angrenzenden Kathodenbereich der Vorrichtung darstellt.

Synonym zu den Begriffen "Anodenbereich" und "Kathodenbereich" werden nachfolgend auch die Ausdrücke Anodenkammer bzw. Kathodenkammer verwendet, selbst wenn die entsprechenden Bereiche nicht aus einer einzigen Kammer bestehen.

Zum Betreiben der Brennstoffzellenvorrichtung 100 wird in axialer Richtung durch die Anodenkammer A ein Anodenfluid (Brennstoff) geleitet, beispielsweise Wasserstoff oder Methanol. Zum Zweck der besseren Übersichtlichkeit sind sowohl in dieser Figur als auch in allen nachfolgenden Figuren keine anodenspezifische Details abgebildet, noch werden solche Details beschrieben, die hinlänglich aus dem Stand der Technik bekannt sind. Vorsorglich sei darauf hingewiesen, dass aus dem Verzicht der Beschreibung von den Erfindungsgedanken nicht direkt betreffenden Merkmalen nicht geschlossen werden darf, dass die praktische Realisierung der Erfindung ohne solche Komponenten auskomme.

Die Brennstoffzellenvorrichtung 100 von Anspruch 1 umfasst ferner eine kathodenseitige Einlassvorrichtung 110 um der Kathodenkammer K Oxidationsmittel zuzuführen, beispielsweise unverbrauchte Luft. Ferner ist eine Vorrichtung 120 vorgesehen, um Abfallstoffe aus der Kreislaufströmung zu entfernen.

Beim Verwenden einer DMFC Brennstoffzelle, bei der das anodenseitige Fluid Methanol umfasst und das kathodenseitig zugeführte Fluid üblicherweise Luft ist (mit dem Oxidationsmittel Sauerstoff), umfasst der Begriff Abfallstoffe sowohl das Reaktionsprodukt Wasser, wie auch die für einen Betrieb der Brennstoffzelle nicht verwertbaren Luftbestandteile, also vor allem Stickstoff.

Die Einlassvorrichtung 110 weist eine Dosiereinrichtung, beispielsweise eine Pumpe, auf, um in die Kathodenkammer unverbrauchte Luft einzulassen. In der dargestellten Ausführungsform sind die Einlassvorrichtung 110 und die Auslassvorrichtung 120 Teil der Einrichtung zur Erzeugung der Kreislaufströmung des kathodenseitigen Fluids. Aus strömungsmechanischen Gründen ist es daher zweckmäßig, Einlass und Auslass axialversetzt vorzusehen. Durch wohldosiertes und kontinuierliches Einströmen von Frischluft wird erreicht, dass sich das gesamte kathodenseitig vorhandene Fluid in einer Kreislaufströmung bewegt. Dabei ist entscheidend, dass die Gesamtmenge des an der Kreislaufströmung teilnehmenden Fluids deutlich größer ist, als zur Sauerstoffversorgung notwendig wäre. Dadurch wird erreicht, dass die auf dem Weg vom Einlass weg auftretende Sauerstoffverarmung klein bleibt.

Figur 2 zeigt eine weitere, technisch einfacher zu realisierende Ausführungsform der Erfindung. Der Figur 1 entsprechende Merkmale weisen dabei entweder die gleichen, oder um 100 erhöhte Bezugszeichen auf. Die Brennstoffzellenvorrichtung 200 von Figur 2 weist zwei plattenförmige Elektrolyteinrichtungen E auf, die einander gegenüberliegend so angeordnet sind, dass sich ihre Anodenseiten direkt gegenüberliegen und so eine Anodenkammer A bilden. Die abgewandten Kathodenseiten bilden den Kathodenbereich der Brennstoffzellenvorrichtung und sind durch das äußere Gehäuse der Brennstoffzellenvorrichtung umgeben. Der obere Abschnitt des Kathodenbereichs steht in zweifacher Fluidverbindung mit dem unteren Abschnitt des Kathodenbereichs und lässt so eine Kreislaufströmung des kathodenseitigen Fluids zu. Wie schon bei der Ausführungsform von Figur 1 erfolgt die Strömung des Anodenfluids zweckmäßigerweise im Wesentlichen senkrecht zur Strömungsrichtung des Kathodenfluids.

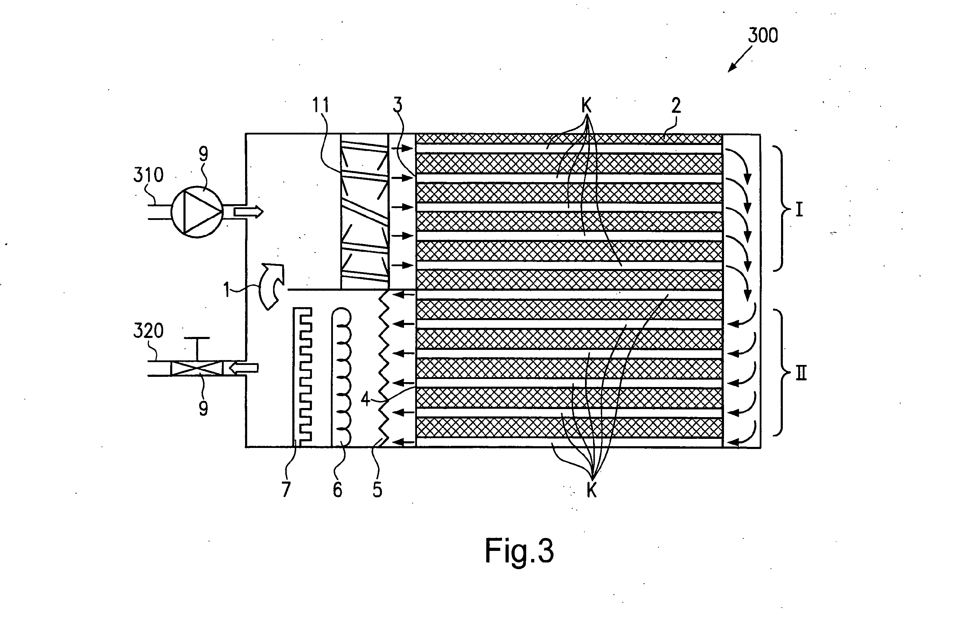

Figur 3 zeigt einen seitlichen Aufriss eines Brennstoffzellenstacks 300. Der gesamte Stack besteht aus einer Vielzahl von gestapelten Strömungsplatten 2, wobei jedes Paar benachbarter Strömungsplatten 2 eine in der Figur nicht abgebildete Elektrolyteinrichtung sandwichartig umgibt. In der Bildebene sind die horizontal verlaufenden kathodenseitig vorgesehenen Fluidkanäle 3 erkennbar. Die anodenseitig an den Strömungsplatten 2 vorgesehenen Fluidkanäle sind nicht abgebildet.

Wie bei den Ausführungsformen der Figuren 1 und 2 strömt auch bei dieser Ausführungsform erfindungsgemäß mehr Kathodenfluid durch den Brennstoffzellenstack, als es dem stöchiometrischen Bedarf entspricht. Hierzu ist die Brennstoffzellenvorrichtung so ausgebildet, dass das Fluid einen ersten Teil I des Stacks (in Fig. 3 beispielsweise die obere Hälfte) in einer Richtung durchläuft, wobei es an den Eintrittsöffnungen 3 des Stacks eintritt und nach dem Austritt aus den entsprechenden Kanälen des Kathodenbereichs K so umgelenkt wird, dass ein zweiter Teil II in der entgegengesetzten Richtung durchlaufen wird. Zum Zwecke eines vorteilhaften Strömungsverlaufes können beispielsweise Strömungsleitflächen und andere Einrichtungen vorgesehen sein.

Nach dem Austreten aus den Kathodenkammern K über den Auslass 4 Danach durchläuft die kathodenseitige Fluidströmung verschiedene Steuereinrichtungen, die z. B. einen Tröpfchenabscheider 5, eine Heizung 6, und/ oder eine Kühlung 7 umfassen. Nach Durchlaufen dieser Einrichtungen wird der überwiegende Teil der Kreislaufströmung wieder umgelenkt und durchläuft das System von Neuem. Nur ein kleiner Teil wird durch eine Drossel 9 ausgetauscht, und zwar bevorzugt in gleichem Maße, in dem über eine Pumpe 8 Frischluft zugeführt wird. Durch diese Einrichtungen kann auch eine Steuerung des Systemdruckes erfolgen.

Die oben beschriebenen Brennstoffzellenvorrichtungen werden erfindungsgemäß mit einem zum großen Teil in Kreis strömenden kathodenseitigen Fluid betrieben, wobei die kathodenseitig vorhandene Menge an Oxidationsmittel in der Kathodenkammer größer ist als unter stöchiometrischen Gesichtspunkten notwendig wäre. Eine Oxidationsmittelzufuhr (Fluidzufuhr) erfolgt entsprechend dem Verbrauch der Brennstoffzellenvorrichtung. Wegen der im Vergleich zur frisch zugeführten Menge deutlich größeren Menge des an der Kreislaufströmung teilnehmenden Fluids werden die Zustandsparameter des kathodenseitigen Fluids durch diese Zufuhr kaum oder nur geringfügig beeinflusst. Durch die Kreislaufströmung wird erreicht, dass diese Zustandsparameter möglichst günstige und homogene Werte im gesamten Kathodenbereich annehmen. Dieser Effekt kann - falls notwendig - durch die oben beschriebenen Steuereinrichtungen noch unterstützt werden.

Die oben beschriebenen Ausführungsformen dienen lediglich zur anschaulichen Erläuterung der der Erfindung zugrunde liegenden Prinzipien. Der Schutzbereich der Erfindung wird durch die nachfolgenden Patentansprüche definiert.

## Patentansprüche

1. Brennstoffzellenvorrichtung (100, 200, 300), umfassend:
einen Kathodenbereich (K) zur Aufnahme eines kathodenseitigen Fluids, und
Einrichtungen zur Erzeugung einer Kreislaufströmung des kathodenseitigen Fluids innerhalb der Brennstoffzellenvorrichtung (100, 200, 300).

2. Brennstoffzellenvorrichtung (200, 300) nach Anspruch 1, in welcher der Kathodenbereich (K) mehrere Kammerbereiche umfasst, die wenigstens teilweise in Fluidverbindung stehen.

3. Brennstoffzellenvorrichtung (100, 200, 300) nach einem der vorangegangenen Ansprüche, mit:
einer kathodenseitigen Einlassvorrichtung (110, 210, 310) für eine Fluidzufuhr, und
einer Einrichtung zur Abtrennung von Abfallstoffen aus der Kreislaufströmung.

4. Brennstoffzellenvorrichtung nach Anspruch 3, in welcher die Abtrennungseinrichtung so ausgebildet ist, dass die abgetrennten Abfallstoffe aus der Brennstoffzellenvorrichtung entfernbar sind.

5. Brennstoffzellenvorrichtung (100, 200, 300) nach einem der vorangegangenen Ansprüche, mit einer Steuereinrichtung zur Steuerung des Anteils an Oxidationsmittel im kathodenseitigen Fluid im Kathodenbereich der Brennstoffzellenvorrichtung.

6. Brennstoffzellenvorrichtung (300) nach einem der vorangegangenen Ansprüche, mit einer Einrichtung, um den Feuchtigkeitsgehalt des im Kreis laufenden Flu idstroms zu regulieren.

7. Brennstoffzellenvorrichtung (300) nach Anspruch 5, in welcher die Einrichtung zur Steuerung des Feuchtigkeitsgehalts einen Tröpfchenabscheider (5) umfasst.

8. Brennstoffzellenvorrichtung nach einem der Ansprüche 3 bis 7, in welcher die Abtrennungseinrichtung eine Drossel (9) zur Entlüftung von gasförmigen Abfallstoffen umfasst.

9. Brennstoffzellenvorrichtung nach einem der Ansprüche 3 bis 8, in welcher die kathodenseitige Einlassvorrichtung (110, 210, 310) eine Dosiereinrichtung für die Fluidzufuhr umfasst.

10. Brennstoffzellenvorrichtung (300) nach einem der vorangegangenen Ansprüche, mit wenigstens einer Temperaturregeleinrichtung, um die Temperatur des kathodenseitigen Fluids zu regulieren.

11. Brennstoffzellenvorrichtung nach einem der vorangegangenen Ansprüche, umfassend:
eine stapelartige Anordnung von Elektrolyteinrichtungen (2).

12. Brennstoffzellenvorrichtung nach einem der vorangegangenen Ansprüche, bei welcher Methanol oder Wasserstoff als Brennstoff verwendet wird.

13. Verfahren zum Betreiben einer Brennstoffzellenvorrichtung (100, 200, 300), bei welchem innerhalb des Kathodenbereichs der Brennstoffzellenvorrichtung eine Kreislaufströmung eines kathodenseitigen Fluids erzeugt wird.
